# EUROPEAN PATENT APPLICATION

(11) **EP 3 889 364 A1**
(43) Date of publication of application: **06.10.2021**
(21) Application number: 21165754.9
(22) Date of filing: 30.03.2021
(51) Int. Cl.: E03C 1/02, F16L 5/00

(54) **AN ADAPTER FOR MOUNTING OF A LEAD-THROUGH DEVICE AND A COUPLING ARRANGEMENT TO A WALL PANEL**

(30) Priority: 02.04.2020 SE 2050374
(71) Applicant: Villeroy & Boch Gustavsberg AB, 134 29 Gustavsberg (SE)
(72) Inventor: RYDETORP, Björn, 447 95 Vårgårda (SE); OLSSON, Kristian, 447 94 Vårgårda (SE); CANI, Pär, 441 43 Alingsås (SE)
(74) Representative: Valea AB

(57) **Abstract**

The present disclosure relates to an adapter (1) for mounting of a lead-through device (3) and a coupling arrangement (19) to a wall panel (5), preferably to a gypsum-type wall panel, such as a one-layered gypsum-type wall panel. Said adapter is provided with a lead-through device carrying section (27, 29), which is arranged to carry a lead-through device (3) comprising a passage portion (11), which is adapted to provide a fluid communication through the wall panel by extending from a first side (7) to a second side (9) of the wall panel. The adapter (1) has a wall panel support surface (16) and a clamp fitting area (16a,..., 16e), wherein the wall panel support surface is arranged to abut the first side of the wall panel when the passage portion is arranged through the wall panel, and the clamp fitting area is arranged to provide fitting, preferably screw fitting, for carrying a coupling arrangement (19) which is arranged to be located on the second side of the wall panel adjacent to the passage portion, such that when fitting of the coupling arrangement to the adapter, a clamping force between the wall panel support surface and the coupling arrangement is created, thereby mounting the lead-through device and the coupling arrangement to the wall panel.

## Description

### TECHNICAL FIELD

The present disclosure relates to an adapter for mounting of a lead-through device and a coupling arrangement to a wall panel, to an assembly for mounting of a fluid fitting to a wall panel, and to the use of such an adapter and assembly.

### BACKGROUND

Water pipes in buildings are commonly arranged inside walls of the building. So called lead-through devices are positioned inside the walls and used to bring the water pipes into the rooms where faucets or other water outlets are to be installed. There are two main categories of such lead-through devices, namely wall boxes and wall bend fixtures.

A wall bend fixture generally requires no water coupling inside the wall. Instead, the water pipe may be bent by an angle of 90° and brought out through the wallboard inside which the wall bend fixture is installed. This is particularly suitable for mounting in e.g. a bathroom or other room having a moisture barrier provided in its wall.

A wall box is generally a sealed box intended to be mounted inside the wall, with a water coupling provided inside the box. The water pipe is connected to the water coupling, and the wall coupling is in turn connected to e.g. a water blender in a bathroom or similar.

In both cases, the lead-through device requires an opening in the wall through which a portion of the lead-through device and/or the water pipes may protrude and provide connection to a faucet, blender or other type of water outlet. The lead-through device is subjected to forces at its connection to the water outlet and thus requires a stable installation in the wall. Typically, this is in part solved by placing for example a plywood board or an oriented strand board (OSB) behind the wallboard, e.g. gypsum board/plasterboard. In this way a double wall construction is created, in which the plywood board provides the support needed for mounting the lead-through device.

However, there are circumstances when such a double wall construction is not desirable. Instead, a solution for fixedly mounting a lead-through device in a single wallboard, e.g. a single gypsum board, is desirable.

Furthermore, it is desirable to mount the lead-through device in the wall, in a manner that keeps the wallboard as intact as possible, keeping any members of the mounting arrangement protruding on the inside of the wallboard to a minimum, since this greatly facilitates providing the moisture barrier on the wallboard.

### SUMMARY

It is a primary object of the present disclosure to overcome or at least alleviate at least one of the disadvantages of the prior art, or to provide a useful alternative. In particular, the object of the present disclosure is to provide an improved mounting of a lead-through device in a wall.

The object above may be achieved by the subject-matter of claim 1.

According to a first aspect of the present disclosure an adapter for mounting of a lead-through device and a coupling arrangement to a wall panel is disclosed, preferably to a gypsum-type wall panel, such as a one-layered gypsum-type wall panel. The adapter may also be used for mounting of a lead-through device and a coupling arrangement to other types of wall panels, such as a two-layered gypsum-type wall panel, or another multilayered wall panel. Said adapter is provided with a lead-through device carrying section, which lead-through device carrying section is arranged to carry a lead-through device comprising a passage portion, which passage portion is adapted to provide a fluid communication through the wall panel by extending from a first side of the wall panel to a second side of the wall panel. The adapter has a wall panel support surface and a clamp fitting area, wherein the wall panel support surface is arranged to abut the first side of the wall panel when the passage portion is arranged through the wall panel, and the clamp fitting area is arranged to provide fitting, preferably screw fitting, for carrying a coupling arrangement which is arranged to be located on the second side of the wall panel adjacent to the passage portion of the lead-through device, such that when the coupling arrangement is fitted to the adapter, a clamping force between the wall panel support surface of the adapter and the coupling arrangement is created, thereby mounting the lead-through device and the coupling arrangement to the wall panel.

An adapter as recited above has the advantage of mounting and preferably fixing the lead-through device to the wall by means of clamping. It may reduce the need for making holes in the wall panel and thereby limit the risk for destroying a moisture barrier of a wall in which the lead-through assembly is installed. It further provides a facilitated installation, since the fixing of the lead-through device in the wall may be carried out through increasing the surface area which is utilised to provide clamping such that the clamping forces per area unit become smaller in comparison with commonly known assemblies. In this way the mounting to single panels and even to less strong panels, such as to one-layered gypsum-type wall panels, is made possible.
Optionally, the lead-through device carrying section is adapted to receive the lead-through device, preferably the lead-through device carrying section is adapted to releasably receive said lead-through device.

An adapter as recited above has the advantage of being provided with a carrying section for the lead-through device that is sized and configured to be received therein, such that the operator is guided by the design into mounting the parts correctly. Having a releasable configuration is nevertheless further improving the design though facilitating the release and potential remounting for testing or improved fitting.

Optionally, the lead-through device carrying section has a snap-on arrangement for releasable fixing of the lead-through device to the adapter.

An adapter as recited above has the advantage of providing a simple arrangement.

Optionally, said lead-through device carrying section and said lead-through device is formed as one piece, such that said lead-through device forms an integrated part of said adapter.

An adapter as recited above has the advantage of providing a simple and ready-to-use device with a combined, dual purpose. The combined adapter-lead-through device may consequently be made lighter and less complex since certain parts may be removed in the combined design. The combined adapter-lead-through device is also simpler and may be quicker to install properly.

Optionally, clamp fitting through the clamping force is achieved by means of at least one fastening device, such as a screw, in a direction from the coupling arrangement on the second side of the wall panel into the clamp fitting area of the adapter on the first side of the wall panel. The clamp fitting area should be configured to receive a fastening device, such as a screw, at any position within a perimeter of the clamp fitting area. Thus, the clamp fitting area does not need to be provided with preformed screw holes or similar, but the fastening device may be inserted and fastened anywhere within the clamp fitting area. This may be achieved by making the adapter of a suitable material, such as a plastic material, with a clamp fitting area of suitable thickness and structure. Furthermore, inserting and tightening the fastening devices may be entirely carried out from the second side of the wall panel. Access to the first side of the wall, for example to fit nuts or other female fastening member onto the fastening devices is not necessary.

An adapter as recited above has the advantage of achieving the clamping between the adapter and the coupling arrangement. Many commonly known coupling arrangements are also manufactured for screw mounting and hereby these coupling arrangements may be used together with the adapter of the present disclosure without further alteration.

Optionally, a surface extension of the wall panel support surface at least partially coincides with a surface extension of the clamp fitting area. By the surface extension of the clamp fitting area is herein to be understood the extension of a plane extending in parallel with the wall panel support surface.

An adapter as recited above has the advantage of providing as large a surface area for each purpose as possible.

Optionally, the wall panel support surface is equal to or larger than the clamp fitting area.

An adapter as recited above has the advantage of increasing the clamping capacity and hence the versatility of the adapter, such that less strong and potentially less dense board types may be used as wall panels which otherwise is not possible due to the forces that may act on a water fitting, such as a faucet, in for example a shower when a user manipulates the faucet or holds it for one reason or the other.

Optionally, the clamp fitting area of the adapter at least partially has a corrugated surface structure.

An adapter as recited above has the advantage of providing a surface structure which is providing good gripping against a wall panel.

Optionally, the adapter has at least two lead-through device carrying sections at a distance from each other, wherein the clamp fitting area and optionally the wall panel support surface, are at least partially located between the at least two lead-through device carrying sections.

An adapter as recited above has the advantage of providing a design which is well adapted to for example shower purposes, or other dual water line purposes. These are often required to have a certain water line-to-line distance in order to enable proper sealing of the wet space against the wall.

Optionally, the clamp fitting area has a surface extension covering at least 25 % of the wall panel support surface, preferably at least 50 % of the wall panel support surface and most preferably at least 75 % of the wall panel support surface.

An adapter as recited above has the advantage of providing a clamp fitting area surface extension which is large since different coupling arrangements may be provided with fitting devices in different positions and the large surface extensions in such a case enables the use of the adapter to many of these different coupling arrangements without further adaptations.

Optionally, the clamp fitting area has a surface extension covering at least an area of at least 625 mm², preferably of at least 2500 mm², most preferably of at least 4000 mm².

An adapter as recited above has the advantage of maximising the surface extension for gripping and clamping purposes.

Optionally, the lead-through device is arranged to mount, and optionally bend, a fluid conduit, preferably a water conduit, to the wall panel to provide the fluid communication through the wall panel. Lead-through devices arranged to bend fluid conduits, also referred to as wall bend fixtures, are well-known in the technical field of the invention and comprises a means for guiding the fluid conduit in a bent condition. To bend the fluid conduit, the wall bend fixture may for example comprise a pivotable portion or other means for facilitating the mechanical bending of the fluid conduit. A wall bend fixture requires no water coupling inside the wall. Instead, the water conduit is bent by an angle of 90° and brought out through the wall panel inside of which the wall bend fixture is installed.

According to a further aspect the coupling arrangement is arranged to mount a fluid fitting, preferably a water fitting, to the wall panel, the fluid fitting preferably being arranged to be coupled to the fluid conduit. The fluid fitting, such as the water fitting, may by way of example be a tap (also referred to as a faucet), a coupling, or a mixer for mixing hot and cold water.

Optionally, the adapter is made from a plastic material.

An adapter as recited above has the advantage of being made of a light-weight material which simultaneously is easy to for example mould into a desired shape, while also being strong enough to provide a fitting surface for the whole assembly of at least the adapter, the lead-through device, a coupling arrangement and a faucet the during its use.

Optionally, the wall panel consists of a single wall panel. In other words, the adapter is designed for mounting of the lead-through device and the coupling arrangement to a single wall panel.

An adapter as recited above has the advantage of being a cheap design and if all other properties that the wall is designed for may be met by a single wall panel, then also the adapter should be designed such that the single wall panel design is made available.

According to a second aspect of the disclosure, an assembly for mounting of a fluid fitting, such as a faucet, to a wall panel, preferably to a gypsum-type wall panel, such as a one-layered gypsum-type wall panel, is disclosed comprising an adapter according to the first aspect, a lead-through device, and a coupling arrangement adapted to mount a fluid fitting, preferably a water fitting.

Optionally, said adapter is provided with two lead-through device carrying sections at a distance from one another, the assembly comprising at least two lead-through devices and a coupling arrangement, wherein the coupling arrangement is arranged to be coupled to at least two fluid conduits passing through the passage portions of the respective lead-through devices on the second side of the wall panel, such that when fitting, preferably screw fitting, the coupling arrangement to the clamp fitting area of the adapter, a clamping force between the wall panel support surface of the adapter and the coupling arrangement is created, thereby mounting the lead-through devices and the coupling arrangement to the wall panel.

Optionally, at least a portion of the clamp fitting area of the adapter is located between the at least two lead-through device carrying sections. The entire clamp fitting area may optionally be located between the at least two lead-through devices.

According to a third aspect, use of an assembly for mounting of a fluid fitting, such as a faucet, to a wall panel, preferably to a gypsum-type wall panel, such as a one-layered gypsum-type wall panel, is disclosed comprising an assembly according to any embodiment of the second aspect.

Furthermore, use of an adapter according to any embodiment of the first aspect for mounting of a lead-through device and a coupling arrangement to a wall panel, preferably to a gypsum-type wall panel, such as a one-layered gypsum-type wall panel, is disclosed.

### BRIEF DESCRIPTION OF THE DRAWINGS

The present disclosure will hereinafter be further explained by means of non-limiting examples with reference to the appended drawings wherein:
- Fig. 1: illustrates a cross-section of a lead-through assembly according to an embodiment of the disclosure;
- Fig. 2: illustrates the lead-through assembly of Fig. 1 with a pipe assembly arranged through the assembly;
- Fig. 3: is a detailed view showing the adapter of Figs. 1 and 2;
- Fig. 4: is a detailed view showing the lead-through device of Figs. 1 and 2;
- Figs. 5a and 5b: illustrate the adapter with the lead-through device attached;
- Fig. 6: illustrates a cross section of the adapter, with the lead-through device attached, secured to the wall; and

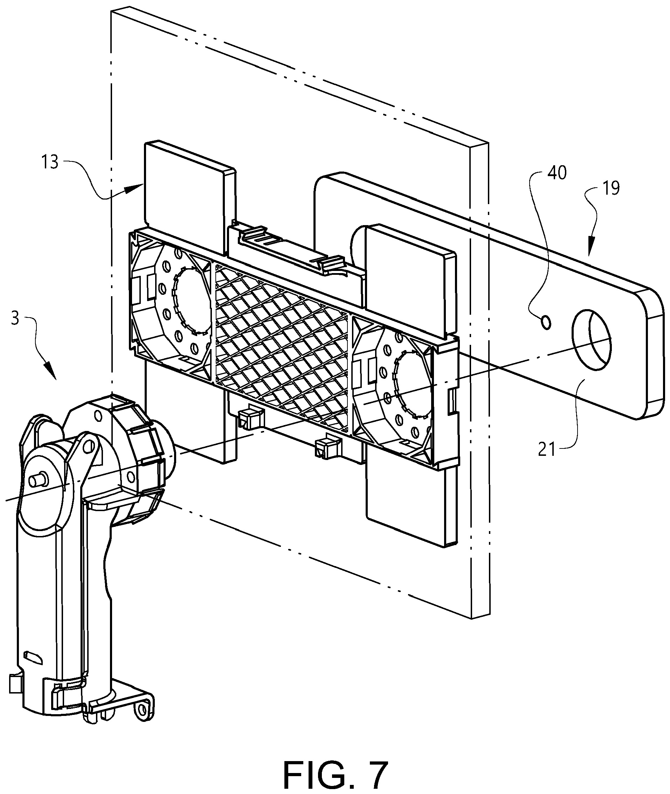

- Fig. 7: is an exploded view of the assembly of Fig. 1.

It should be noted that the appended drawings are schematic and that individual components are not necessarily drawn to scale and that the dimensions of some features of the present disclosure may have been exaggerated for the sake of clarity.

### DETAILED DESCRIPTION

The disclosure will, in the following, be exemplified by embodiments. It should however be realized that the embodiments are included in order to explain principles of the disclosure and not to limit the scope of the disclosure, as defined by the appended claims. A feature from one embodiment may be combined with one or more features of any other embodiment.

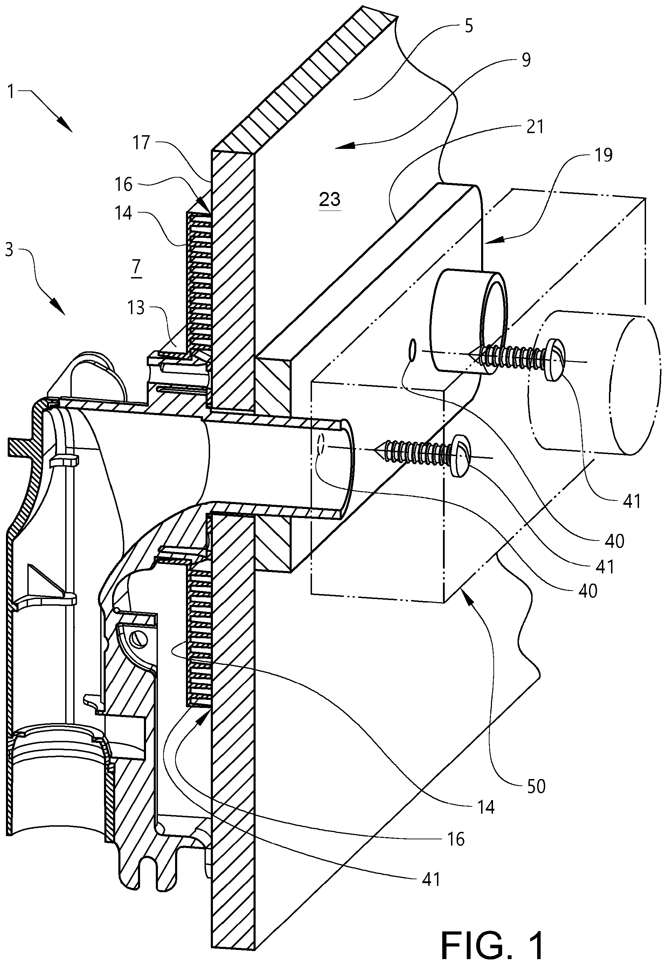

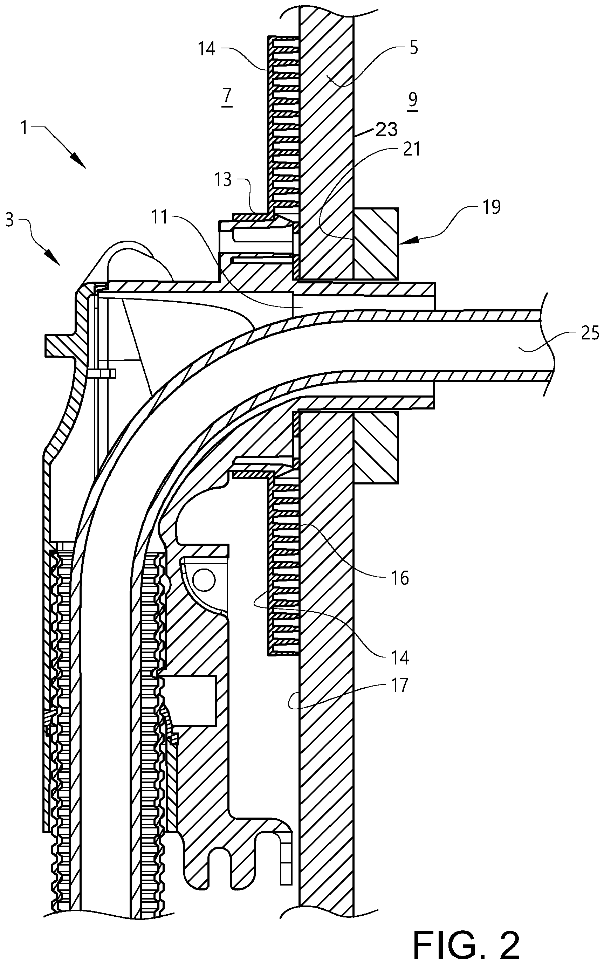

Figs. 1 and 2 illustrate one example of an assembly 1 for mounting of a fluid fitting, such as a faucet, according to an embodiment of the present disclosure. The assembly 1 is adapted to provide a fluid communication through the wall 5 in a direction of extension generally from a first side 7 of the wall 5 to a second side 9 of the wall. Here, the first side 7 corresponds to an inlet side and the second side 9 corresponds to an outlet side. This may however be differently oriented. The assembly 1 comprises a lead-through device 3. The lead-through device 3 comprises a passage portion 11 which extends through an opening in the wall 5 to the second side 9 of the wall 5 and is adapted to provide the fluid communication.

The assembly 1 comprises an adapter 13 according to an embodiment of the present disclosure, to which the lead-through device 3 is attached, such that the passage portion 11 extends through an opening of the adapter 13. The adapter 13 comprises support sections 14. The support sections 14 comprise a wall panel support surface 16. The wall panel support surface 16 abuts a surface 17 of the first side 7 of the wall 5, referred to as the first wall surface 17.

The wall panel 5 is in the figures a one-layered gypsum-type wall panel 5, since the disclosure is particularly advantageous in relation to such a wall panel 5. However, the disclosure may be used in relation to any type of wall panel and any number of adjacent panels, such as two panels of which one is a plywood type of panel and the other a gypsum-type of panel. Preferably the gypsum-type panel is a type particularly designed for wet spaces.

The assembly 1 further comprises a coupling arrangement 19 located adjacent to the passage portion 11 of the lead-through device 3 from the second side 9 of the wall 5. The coupling arrangement 19 comprises a contact surface 21, which abuts a surface 23 on the second side 9 of the wall 5, referred to as the second wall surface 23, when the coupling arrangement 19 is located adjacent to the passage portion 11.

The coupling arrangement 19 is provided with two through holes 40 through which a respective screw 41 may be used to fasten the coupling arrangement 19. The screws 41 may be exchanged for some other type of wall panel 5 penetrating fastening means 41.

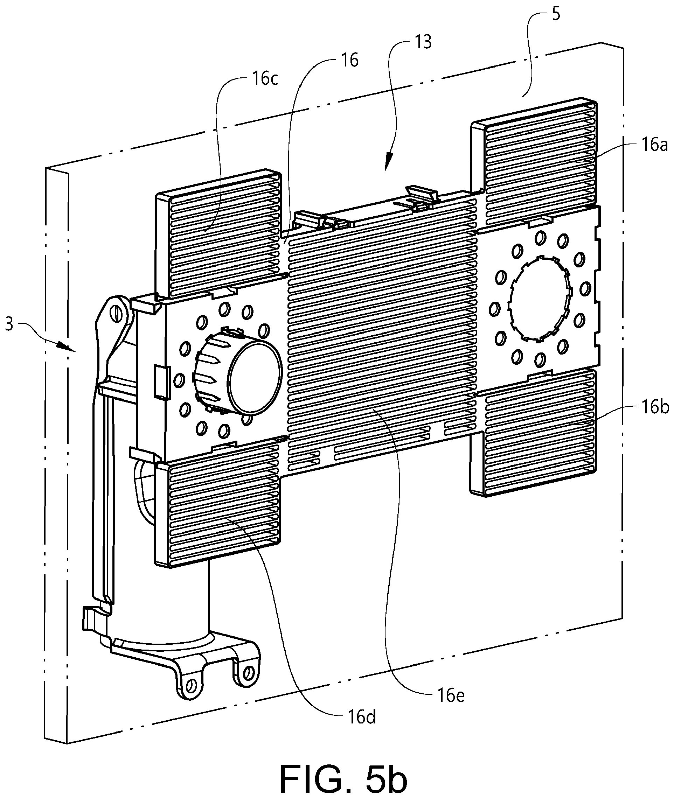

The adapter 13 not only has a wall panel support surface 16, but also a clamp fitting area 16a,...,16e, which may be best seen in Fig. 5b. In the shown embodiment, the clamp fitting area 16a,..., 16e comprises five portions 16a,..., 16e. The clamp fitting area 16a,...,16e is adapted to provide fitting or fixation for the screws 41, for carrying the coupling arrangement 19. The screws 41 pass through the wall panel 5 and into the portion 16e of the clamp fitting area 16a,..., 16e of the adapter 13. Different types of coupling arrangements 19, such as coupling arrangements 19 from different manufacturers may have slightly different design, and different position and number of the through holes 40 for the screws 41, and hence the clamp fitting area 16a,...,16e of the present adapter 13 has a relatively seen large surface extension to accommodate such different designs. Normally however, the distance between and size of the holes for the lead-through devices 3 and/or fluid conduits 25 are set by standardization, whereby this particular aspect of the adapter 13 is normally not altered. A supporting idea behind the present disclosure is to facilitate the use of a general adapter for these differently designed coupling arrangements 19.

In this way, the assembly 1 is fixed in the wall panel 5 by means of clamping. Thus, the wall panel 5 is clamped between the wall panel support surface 16 of the support section 14 and the contact surface 23 of the coupling arrangement 19. Support is provided by the adapter 13, being located on the first side 7 of the wall 5, for the coupling arrangement 19, to press against the wall 5 from the second side 9. Thus, and as discussed above, the assembly 1 is particularly useful when the wall 5 in which the lead-through device 3 is installed is for example a single wall panel of some kind, not being able to support an installation on its own.

The lead-through device 3 in Fig. 1 is of a wall bend fixture type, and in Fig. 2 the lead-through device 3 is illustrated with a fluid conduit 25 arranged through the same. The fluid conduit 25 is preferably a water hose, such as a so-called PEX-hose. The lead-through device may alternatively be of a wall box type in which case a fluid conduit is connected to the wall box on the first side of the wall.

Thus, the assembly 1 may be mounted in the wall 5 from the second side 9 of the wall 5. The second side 9 of the wall 5 typically faces a wet space, and thus installation may be facilitated by providing easy access and available space for mounting activity.

The coupling arrangement 19 is particularly useful to couple a water fitting 50 (indicated by ghost lines in Fig. 1) to the wall panel 5 and the fluid conduits 25. In a shower the water fitting 50 may be a faucet for mixing cold and hot tap water and distributing the mixed water to a shower nozzle of some kind. Generally, such coupling arrangements 19 are made of some kind of metal, particularly at least coated with a water-resistant material, or fully made of such water-resistant material. However other materials may be suitable. The coupling arrangement 19 is stiff enough to provide support for the water fitting 50 and to spread the fitting forces acting thereon by the screws 41 or other fastening means in over substantially the whole of the contact surface 21 of the coupling arrangement 19.

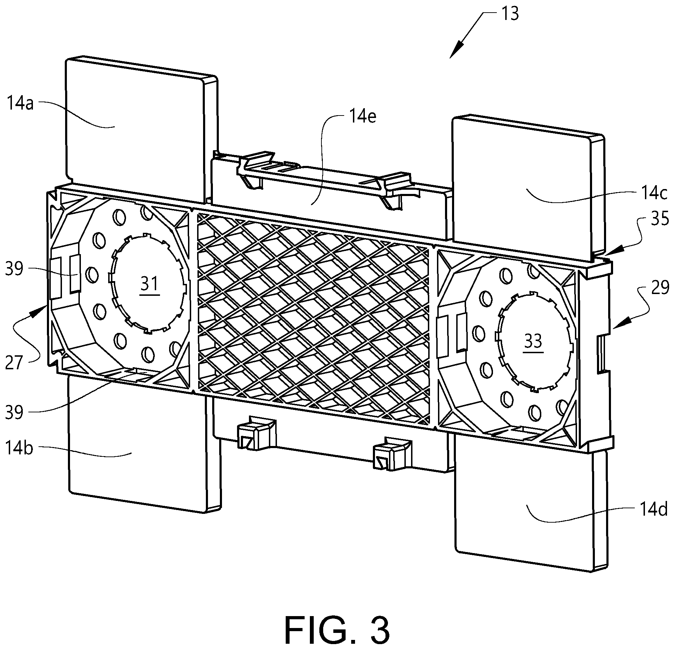

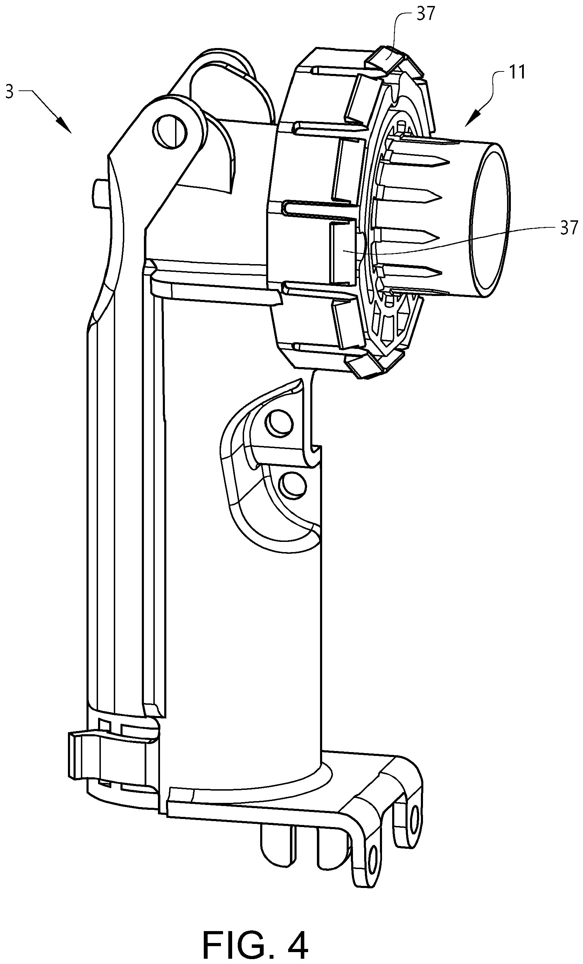

The assembly 1 in Figs. 1 and 2 will be further detailed below with reference to Figs. 3 and 4. Fig. 3 shows the adapter 13. The adapter 13 comprises two lead-through device carrying sections 27, 29 for receiving a lead-through device 3 respectively. The lead-through device carrying sections 27, 29 each comprise an opening 31, 32 for a passage portion 11 of each lead-through device 3 to extend through. Noticeably, an adapter 13 and thus an assembly 1 may be adapted for any number of lead-through devices 3, for example one or four lead-through devices 3. Hence, the size of the adapter 13 would be adjusted accordingly.

The adapter 13 according to the present disclosure comprises five support sections 14a,..., 14e, which, as illustrated, are located around a periphery of the lead-through device carrying sections 27, 29. Each support section 14a,..., 14e comprises a portion of the wall panel support surface 16. In the present embodiment, each support section 14a,..., 14e also comprises a portion of the clamp fitting area 16a,..., 16e such that the clamp fitting area is distributed over a larger surface extension. The number of support sections of the adapter 13 is however discretionary. The surface extension of the wall panel support surface 16 consequently at least partially coincides with the surface extension of the clamp fitting area 16a,..., 16e. In the present embodiment the wall panel support surface 16 is approximately equal in size and location to the clamp fitting area 16e. Each support section 14a,.., 14e is consequently adapted to act both as a wall panel support surface 16 and as a clamp fitting area 16a,..., 16e. The total extension of the wall panel support surface 16 may however also be smaller or larger than the total extension of the clamp fitting area 16a,..., 16e.

The adapter 13 is made of a suitable plastic material, preferably the same material in its entirety. It may however be made of different materials if found suitable. The adapter 13 need to be stiff in order to provide an adequate wall panel support surface 16, while being flexible in order to provide a proper basis for screws 41 or other fastening means for fixation of the coupling arrangement 19.

In an embodiment of the assembly 1 at least one of the support sections 14 of the adapter 13 is selectively removable. In this way the location, or extension, of the wall panel support surface 16 is adjustable depending on available space for installation/mounting. With reference to Fig. 3, an indication of fracture 35 extending along the interface between a receiving section 29 and support section 14c may serve as a break off zone for selectively removing the support section 14c. Any other support section 14 may be selectively removable in a similar manner.

Fig. 4 illustrates the exemplary lead-through device 3 of the arrangement in Figs. 1 and 2. The lead-through device 3 comprises the passage portion 11 which is to be arranged through the opening of the receiving section of the adapter 13 and further through an opening in the wall panel 5. The lead-through device 3 comprises snap-lock means 37 spaced apart along a periphery which matches corresponding snap-lock means 39 of the receiving section of the adapter 13, see Fig. 3. Thus, the lead-through device 3 is attached to the adapter 13 with a snap-lock connection. Other attachment may however be found suitable.

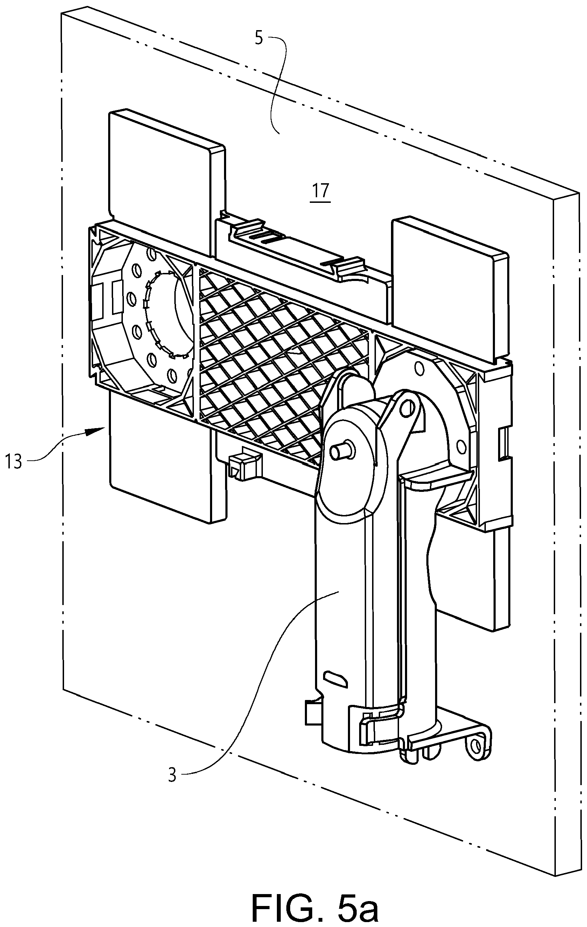

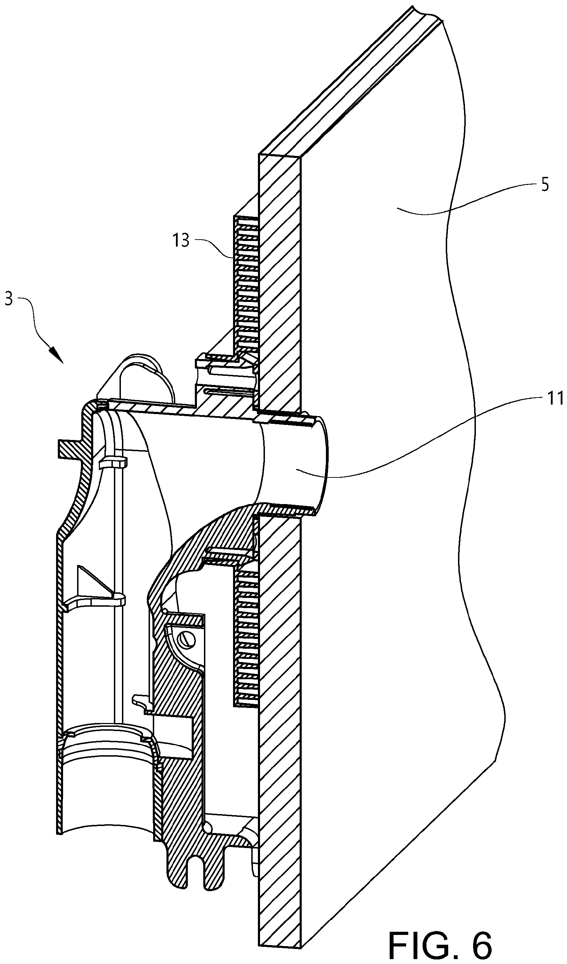

With reference to Figs. 5a, 5b and 6, the adapter 13 with the lead-through device 3 attached is illustrated. The wall 5 is illustrated as see-through making the clamp fitting areas 16a,..., 16e of the support sections 14a,.., 14e visible in Fig. 5b. As illustrated the wall panel support surface 16 abuts a first wall surface 17 when the passage portion 11 extends through the opening to the second side 9 of the wall 5. Consequently, also the clamp fitting areas 16a,..., 16e abut the first wall surface 17

The adapter 13 is secured to the wall panel 5 such that the passage portion 11 is held in position while the coupling arrangement 19, shown in figs. 1 and 2, is attached and fitted. The adapter 13 may be secured to the wall panel 5 temporarily by securing means, e.g. screws or nails, extending in a direction from the second side 9 of the wall 5, through the wall panel 5 and into the adapter 13. In this case, the support sections 14a, ..,14e may provide attachment zones for the securing means.

Each clamp fitting area 16a,.., 16e is in the shown embodiment designed so as to provide a linear screen pattern, or a raster, extending over the main area of the support sections 14a,..., 14e, see Fig. 5b for example. This may also be called a corrugated surface. The cross-section of the support sections 14a,..., 14e in Figs. 1 and 2 also show the design of the clamp fitting area 16a,... 16e. Thus, the wall panel support surface 16 may be seen as being interrupted by a plurality of grooves 18. The grooves extend along an extension of the wall panel support surface 16 and parallel to each other, thus spaced apart in a regular pattern. The pattern of grooves may provide attachment for fastening devices such as screws, as well as reduces the weight of the adapter. The pattern of grooves may also provide a wall panel support surface 16 which is stiff enough to distribute the fitting forces from the fastening devices 41, such that the whole wall panel support surface 16 assist in supporting the adapter 13 onto the wall panel 5. The support sections 14a,.., 14e have a closed back end, i.e. at a side of the adapter 13 facing away from the wall panel support surface 16, which may be seen in Figs. 1 and 2. The wall panel support surface may also be designed in alternative ways. Purely by way of example, the wall panel support surface may be coherent, without being interrupted. A fastening device, such as a screw, may be inserted at any position within the perimeter of the clamp fitting area 16a,..., 16e, which in the present embodiment corresponds to each one of the support sections 14a,.., 14e. Thereby, the wall panel support surface 16 will be secured abutting the first wall surface 17.

The clamp fitting area 16a,..., 16e may have a surface extension covering at least 25 % of the wall panel support surface 16, preferably at least 50 % of the wall panel support surface 16 and most preferably at least 75 % of the wall panel support surface 16. The clamp fitting area 16a,..., 16e may further have a surface extension covering at least an area of 625 mm2, preferably of at least 2500 mm2, most preferably of at least 4000 mm2.

As a complement to the fastening means 41, the wall panel support surface of the adapter 16 and/or the contact surface 23 of the coupling arrangement 19 may be secured by means of an adhesive, e.g. by gluing. Such complementary fastening does not however add to the clamping and stabilisation of the wall panel.

Noticeably, the passage portion 11 is illustrated as extending past the wall 5 to the second side 9. However, the length of the passage portion 11 and thus, to which extent it protrudes through the opening is selectable.

The method comprising the use of an adapter is advantageous for a wall construction comprising a single wallboard, e.g. plasterboard. In this case, the adapter provides the desired stability so that the lead-through device can be clamped to the wall by the retainer.

Preferably, no additional guiding plate, washer, or similar part, is needed on the second side of the wall in order to insert the fastening devices through the wall during mounting, as may be gleaned from the drawings. Thus, the fastening devices are installed directly through wall without any intermediate step of providing a guiding element, such as a plate, a washer or similar part, situated on the second wall surface. This has the positive effect of reducing the interference with a possible moisture barrier. The less protruding elements that disrupt the evenness of a surface on which a moisture barrier is intended to be applied, the less complicated and more efficiently the step of applying the moisture barrier.

Further modifications of the disclosure within the scope of the appended claims are feasible. As such, the present disclosure should not be considered as limited by the embodiments and figures described herein. Rather, the full scope of the disclosure should be determined by the appended claims, with reference to the description and drawings.

## Claims

1. An adapter (13) for mounting of a lead-through device (3) and a coupling arrangement to a wall panel (5), said adapter (13) being provided with a lead-through device carrying section (27, 29), which lead-through device carrying section (27, 29) is arranged to carry a lead-through device (3) comprising a passage portion (11), which passage portion (11) is adapted to provide a fluid communication through the wall panel (5) by extending from a first side (7) of the wall panel (5) to a second side (9) of the wall panel (5), wherein the adapter (13) has a wall panel support surface (16) and a clamp fitting area (16a,..., 16e), wherein the wall panel support surface (16) is arranged to abut the first side (7) of the wall panel (5) when the passage portion (11) is arranged through the wall panel (5), and the clamp fitting area (16a,..., 16e) is arranged to provide fitting, preferably screw fitting, for carrying a coupling arrangement (19) which is arranged to be located on the second side (9) of the wall panel (5) adjacent to the passage portion (11) of the lead-through device (3), such that when the coupling arrangement (19) is fitted to the adapter (13), a clamping force between the wall panel support surface (16) of the adapter (13) and the coupling arrangement (19) is created, thereby mounting the lead-through device (3) and the coupling arrangement (19) to the wall panel (5).

2. An adapter (13) according to claim 1, wherein the lead-through device carrying section (27, 29) is adapted to receive the lead-through device (3), preferably the lead-through device carrying section (27, 29) is adapted to releasably receive said lead-through device (3).

3. An adapter (13) according to claim 2, wherein the lead-through device carrying section (27, 29) has a snap-on arrangement for releasable fixing of the lead-through device (3) to the adapter (13).

4. An adapter (13) according to claim 1, wherein said lead-through device carrying section (27, 29) and said lead-through device (3) is formed as one piece, such that said lead-through device (3) forms an integrated part of said adapter (13).

5. An adapter (13) according to any one of the preceding claims, wherein clamp fitting through the clamping force is achieved by means of at least one fastening device (41), such as a screw, in a direction from the coupling arrangement (19) on the second side (9) of the wall panel (5) into the clamp fitting area (16a,..., 16e) of the adapter (13) on the first side (7) of the wall panel (13).

6. An adapter (13) according to any one of the preceding claims, wherein a surface extension of the wall panel support surface (16) at least partially coincides with a surface extension of the clamp fitting area (16a,..., 16e).

7. An adapter (13) according to any one of the preceding claims, wherein the wall panel support surface (16) is equal to or larger than the clamp fitting area (16a,..., 16e).

8. An adapter (13) according to any one of the preceding claims, wherein the clamp fitting area (16a,..., 16e) of the adapter (13) at least partially has a corrugated surface structure.

9. An adapter (13) according to any one of the preceding claims, wherein the adapter (13) has at least two lead-through device carrying sections (27, 29) at a distance from each other, wherein the clamp fitting area (16a,..., 16e) and optionally the wall panel support surface (16), are at least partially located between the at least two lead-through device carrying sections (27, 29).

10. An adapter (13) according to any one of the preceding claims, wherein the clamp fitting area (16a,..., 16e) has a surface extension covering at least 25 % of the wall panel support surface (16), preferably at least 50 % of the wall panel support surface (16) and most preferably at least 75 % of the wall panel support surface (16), or wherein the clamp fitting area (16a,..., 16e) has a surface extension covering at least an area of at least 625 mm², preferably of at least 2500 mm², most preferably of at least 4000 mm².

11. An adapter (13) according to any one of the preceding claims, wherein the adapter (13) is made from a plastic material.

12. An assembly (1) for mounting of a fluid fitting, such as a faucet, to a wall panel (5), preferably to a gypsum-type wall panel (5), such as a one-layered gypsum-type wall panel (5), comprising an adapter (13) according to any one of the preceding claims, a lead-through device (3), and a coupling arrangement (19) adapted to mount a fluid fitting, preferably a water fitting.

13. An assembly (1) for mounting of a fluid fitting according to claim 12, wherein said adapter (13) is provided with at least two lead-through device carrying sections (27, 29) at a distance from one another, the assembly (1) comprising at least two lead-through devices (3) and a coupling arrangement (19), wherein the coupling arrangement (19) is arranged to be coupled to at least two fluid conduits (25) passing through the passage portions (11) of the respective lead-through devices (3) on the second side (9) of the wall panel (5), such that when fitting, preferably screw fitting, the coupling arrangement (19) to the clamp fitting area (16a,... 16e) of the adapter (13), a clamping force between the wall panel support surface (16) of the adapter (13) and the coupling arrangement (19) is created, thereby mounting the lead-through devices (3) and the coupling arrangement (19) to the wall panel (5).

14. An assembly (1) for mounting of a fluid fitting according to claim 13, wherein at least a portion (16e) of the clamp fitting area (16a,... ,16e) of the adapter (13) is located between the at least two lead-through device carrying sections (27, 29).

15. Use of an assembly (1) according to any one of the claims 12-14 for mounting of a fluid fitting, such as a faucet, to a wall panel (5), preferably to a gypsum-type wall panel (5), such as a one-layered gypsum-type wall panel (5).
